# EUROPÄISCHE PATENTANMELDUNG

(11) **EP 4 458 761 A1**
(43) Veröffentlichungstag der Anmeldung: **06.11.2024**
(21) Anmeldenummer: 23020211.1
(22) Anmeldetag: 05.05.2023
(51) Int. Cl.: C01B 3/02, B01D 53/047, B01D 53/14, B01D 53/62, C01B 3/16, C01B 3/38, C01B 3/56, C01B 3/58

(54) **VERFAHREN UND VORRICHTUNG ZUR KOHLENDIOXIDARMEN WASSERSTOFF-ERZEUGUNG**

(71) Anmelder: Linde GmbH, 82049 Pullach (DE)
(72) Erfinder: Schwarzhuber, Josef, 82049 Pullach (DE); Seliger, Andreas, 82049 Pullach (DE); Müller-Thorwart, Ole, 82049 Pullach (DE); Haselsteiner, Thomas, 82049 Pullach (DE)
(74) Vertreter: Fischer, Werner

(57) **Zusammenfassung**

Die Erfindung betrifft ein Verfahren sowie eine Vorrichtung zur Erzeugung eines Wasserstoffprodukts (14), bei dem ein kohlenstoffhaltiger Einsatz (1) durch Reformierung (R) und Wassergas-Konvertierung (S) umgesetzt wird, um ein Wasserstoff und Kohlendioxid enthaltendes, als Synthesegas bezeichnetes Gasgemisch (5) zu erhalten, aus dem in einem ersten CO₂-Trennschritt (T1) durch die Abtrennung von Kohlendioxid Rohwasserstoff (8) entsteht, der durch wenigstens einen weiteren Verfahrensschritt (B) zum Wasserstoffprodukt (14) aufbereitet wird, wobei Prozesswärme durch Verbrennung eines Brennstoffs (16) gewonnen und aus dem Synthesegas (5) abgetrenntes Kohlendioxid (13) durch Sequestrierung entsorgt oder einer stofflichen Nutzung zugeführt wird, Kennzeichnend hierbei ist, dass das Synthesegas (5) in einen ersten (6) und einen zweiten Synthesegasteilstrom (7) getrennt wird, von denen der erste (6) im ersten CO₂-Trennschritt (T1) behandelt wird, um den Rohwasserstoff (8) zu erhalten, während aus dem zweiten Synthesegasteilstrom (7) durch die Abtrennung von Kohlendioxid in einem zweiten CO₂-Trennschritt (T2) ein weitgehend aus Wasserstoff bestehendes Brenngas (16) entsteht, das zur Gewinnung von Prozesswärme verbrannt wird.

## Beschreibung

Die Erfindung betrifft ein Verfahren zur Erzeugung eines Wasserstoffprodukts, bei dem ein kohlenstoffhaltiger Einsatz durch Reformierung und Wassergas-Konvertierung umgesetzt wird, um ein Wasserstoff und Kohlendioxid enthaltendes, als Synthesegas bezeichnetes Gasgemisch zu erhalten, aus dem in einem ersten CO₂-Trennschritt durch die Abtrennung von Kohlendioxid Rohwasserstoff entsteht, der durch wenigstens einen weiteren Verfahrensschritt zum Wasserstoffprodukt aufbereitet wird, wobei Prozesswärme durch Verbrennung eines Brennstoffs gewonnen und aus dem Synthesegas abgetrenntes Kohlendioxid durch Sequestrierung entsorgt oder einer stofflichen Nutzung zugeführt wird.

Wasserstoffprodukte wie Reinwassersoff, der wenigstens zu 99,5mol-% aus Wasserstoff besteht, oder Ammoniaksynthesegas, in dem Wasserstoff und Stickstoff im Verhältnis 3:1 vorliegen, werden heute noch überwiegend aus kohlenstoffhaltigen Einsätzen unter Bildung und Freisetzung großer Mengen klimaschädlichen Kohlendioxids erzeugt. Doch gibt es verstärkt Anstrengungen, das anfallende Kohlendioxid nicht in die Atmosphäre zu entlassen, sondern durch Sequestrierung oder stoffliche Nutzung zu entsorgen.

Nach dem Stand der Technik wird zur Erzeugung eines Wasserstoffprodukts ein kohlenstoffhaltiger Einsatz, bei dem es sich etwa um Erdgas handelt, ggf. entschwefelt und anschließend durch Partielle Oxidation, Autothermalreformierung, Dampfreformierung oder eine Kombination von zwei oder mehr dieser Verfahren zu einem als Syntheserohgas bezeichneten Gasgemisch umgesetzt, das zu einem großen Teil aus Wasserstoff, Kohlenmonoxid sowie Kohlendioxid besteht und das daneben noch weitere Stoffe wie Schwefelwasserstoff oder Argon enthalten kann. Anschließend wird das Syntheserohgas einer Wassergas-Konvertierung unterzogen, um das enthaltene Kohlenmonoxid mit Wasser zu Wasserstoff und Kohlendioxid umzusetzen und ein weitgehend aus Wasserstoff und Kohlendioxid bestehendes Synthesegas zu gewinnen. In einem typischerweise als Sauergaswäsche durchgeführten CO₂-Trennschritt wird Kohlendioxid aus dem Synthesegas abgetrennt, wobei eine Kohlendioxidfraktion mit einer für ihre Sequestrierung oder stofflichen Nutzung ausreichenden Reinheit sowie eine als Rohwasserstoff bezeichnete Wasserstofffraktion, die Reste von Kohlenmonoxid, Kohlendioxid und Methan enthält, und deren Wasserstoffgehalt gewöhnlich bei ca. 98mol-% liegt, erhalten werden.

Zur Bildung des Wasserstoffprodukts wird der Rohwasserstoff beispielsweise durch Methanisierung, Stickstoffwäsche oder Druckwechseladsorption behandelt, wobei Kohlenmonoxid umgewandelt oder gemeinsam mit Kohlendioxid in einem Restgas abgetrennt wird und eine weitgehend kohlenstofffreie Wasserstofffraktion entsteht, die das Wasserstoffprodukt bildet oder aus der etwa durch Zugabe von Stickstoff ein Ammoniaksynthesegas als Wasserstoffprodukt erhalten wird.

Sauergaswäschen nutzen die Eigenschaft von Flüssigkeiten aus, Kohlendioxid und andere Sauergase aus einem Gasgemisch selektiv zu absorbieren und in Lösung zu halten. Je höher der Druck ist, bei dem die Wäsche durchgeführt wird, desto besser werden die Sauergase absorbiert und aus dem zu reinigenden Gasgemisch abgetrennt. Da das Synthesegas auf einem Druckniveau anfällt, das typischerweise zwischen 25 und 45bar liegt, sind die zu behandelnden Volumenström klein, so dass das Synthesegas mit vergleichsweise geringen Investitions- und Betriebskosten durch Sauergaswäsche behandelt werden kann.

Kohlendioxid ist auch in Rauchgasen enthalten, die bei der Erzeugung von Wasserstoffprodukten in Reformern und/oder Öfen entstehen, zu deren Beheizung gewöhnlich Erdgas oder kohlenstoffhaltige Restgase verbrannte werden. Anders als das Synthesegas, sind die Rauchgase drucklos. Da sie deshalb nur sehr kostenintensiv und aufwendig durch eine Sauergaswäsche behandelt werden können, werden sie gewöhnlich zusammen mit dem bei der Verbrennung gebildeten Kohlendioxid in die Atmosphäre entlassen.

Mit den beschriebenen Methoden lassen sich daher nur maximal 95% des zur Erzeugung des Wasserstoffprodukts eingesetzten Kohlenstoffs in Form von Kohlendioxid abtrennen und durch Sequestrierung entsorgen oder stofflich nutzen. Je nach den gesetzlichen Vorgaben und Pönalen auf die Kohlendioxidemissionen, kann es erforderlich sein, höhere Kohlenstoff-Abtrennquoten zu realisieren.

Aufgabe der Erfindung ist es, ein Verfahren der gattungsgemäßen Art sowie eine Vorrichtung zu dessen Durchführung anzugeben, die es ermöglichen, Wasserstoffprodukte mit deutlich geringerer Kohlendioxidfreisetzung als im Stand der Technik zu erzeugen.

Diese Aufgabe wird verfahrensseitig erfindungsgemäß dadurch gelöst, dass das Synthesegas in einen ersten und einen zweiten Synthesegasteilstrom getrennt wird, von denen der erste im ersten CO₂-Trennschritt behandelt wird, um den Rohwasserstoff zu erhalten, während aus dem zweiten Synthesegasteilstrom durch die Abtrennung von Kohlendioxid in einem zweiten CO₂-Trennschritt ein weitgehend aus Wasserstoff bestehendes Brenngas entsteht, das zur Gewinnung von Prozesswärme verbrannt wird.

Das im zweiten CO₂-Trennschritt aus dem zweiten Synthesegasteilstrom erzeugte Brenngas enthält Kohlenstoffverbindungen wie Kohlendioxid, Kohlenmonoxid oder Methan nur in geringen Mengen, so dass bei seiner Verbrennung ein weitgehend kohlendioxidfreies Rauchgas entsteht. Sinnvollerweise wird sowohl das im ersten als auch das im zweiten CO₂-Trennschritt aus dem Synthesegas abgetrennte Kohlendioxid vollständig durch Sequestrierung entsorgt oder stofflich verwertet. Da das Brenngas zumindest einen Teil der kohlenstoffhaltigen, nach dem Stand der Technik im Prozess eingesetzten Brennstoffe ersetzt, ist die bei der Erzeugung des Wasserstoffprodukts in die Atmosphäre freigesetzte Kohlendioxidmenge im Vergleich zum Stand der Technik reduziert.

Vorzugsweise wird dem zweiten CO₂-Trennschritt über den zweiten Synthesegasteilstrom so viel Synthesegas zugeführt, dass das Brenngas in einer Menge erhalten wird, die ausreichend groß ist, um den Brennstoffbedarf der Wasserstofferzeugung vollständig zu decken. Besonders bevorzugt wird nicht mehr Brenngas gewonnen, als zur vollständigen Deckung des Brennstoffbedarfs bei der Erzeugung des Wasserstoffprodukts benötigt wird. Möglich ist es aber auch, eine größere Brenngasmenge zu erzeugen und nicht im Prozess einsetzbares Brenngas gegen Gutschrift zu exportieren.

Zur Abtrennung von Kohlendioxid aus Synthesegas sind aus dem Stand der Technik verschiedene Trennmethoden bekannt, von denen jede sowohl im ersten als auch im zweiten CO₂-Trennschritt eingesetzt werden kann. Insbesondere können in einem CO₂-Trennschritt Kombinationsverfahren aus Membrantrennung, Druckwechseladsorption (engl. Pressure Swing Adsorption, PSA) und kryogener Gaszerlegung zum Einsatz kommen. Vorzugsweise wird jedoch zumindest einer der beiden CO₂-Trennschritte als Sauergaswäsche durchgeführt, bei der beispielsweise eine alkalische wässrige Aminlösung als Waschmittel dient.

Besonders bevorzugt werden der erste und der zweite CO₂-Trennschritt als Sauergaswäsche ausgeführt, wobei in beiden Sauergaswäschen das gleiche Waschmittel zum Einsatz kommt. Die beiden Sauergaswäschen können in diesem Fall so betrieben werden, dass das in der ersten Sauergaswäsche mit Kohlendioxid beladene Waschmittel gemeinsam mit dem in der zweiten Sauergaswäschen mit Kohlendioxid beladenen Waschmittel regeneriert wird. Abgesehen von der ggf. gemeinsam genutzten Waschmittelregenerierung werden die beiden Sauergaswäschen zweckmäßigerweise unabhängig voneinander betrieben, so dass es möglich ist, die Kohlendioxidgehalte von Rohwasserstoff und Brenngas individuell zu optimieren. So kann es beispielsweise wirtschaftlich sinnvoll sein, die zweite Sauergaswäsche mit einer geringeren Kohlendioxid-Abtrennrate zu betreiben als die erste Sauergaswäsche.

Bevorzugt wird das erzeugte Brenngas verbrannt, um für den Prozess benötigten Dampf zu gewinnen oder um einen Einsatzstoff für die Reformierung vorzuwärmen. Möglich ist aber auch, einen zur Reformierung eingesetzten Dampfreformer oder einen Vorreformer mit dem Brenngas zu beheizen.

Das erfindungsgemäße Verfahren eignet sich insbesondere zum Einsatz in einer Ammoniaksynthese, wobei der Rohwasserstoff durch Methanisierung oder Stickstoffwäsche oder Stickstoffzugabe zu einem Ammoniaksynthesegas aufbereitet wird.

Die Umsetzung des kohlenstoffhaltigen Einsatzes kann im Rahmen des erfindungsgemäßen Verfahrens durch Partielle Oxidation, Autothermalreformierung, Dampfreformierung oder eine Kombination von zwei oder mehr dieser Verfahren erfolgen, denen eine Vorreformierung vorangehen kann. Mit besonderem Vorzug kann das erfindungsgemäße Verfahren dann eingesetzt werden, wenn der kohlenstoffhaltige Einsatz durch Autothermal-Reformierung oder Partielle Oxidation umgesetzt wird. Anders als beim Einsatz eines Dampfreformers, werden in diesen Fällen nur kleine, beispielsweise zur Anwärmung von Einsatzstoffen oder zur Dampferzeugung eingesetzte Öfen unter Freisetzung von vergleichsweise geringen Rauchgasmengen in die Atmosphäre beheizt. Um den Brennstoffbedarf dieser Öfen durch ein weitgehend aus Wasserstoff bestehendes Brenngas zu decken, braucht nur ein kleiner Anteil des Synthesegases im zweiten CO₂-Trennschritt behandelt zu werden, so dass der zweite COz-Trennschritt mit geringen Investitionskosten realisiert werden kann.

Weiterhin betrifft die Erfindung eine Vorrichtung zur Erzeugung eines Wasserstoffprodukts, mit einer Reformiereinrichtung und einem mit der Reformiereinrichtung verbundenen Wassergas-Konverter, über die ein kohlenstoffhaltiger Einsatz durch Reformierung und Wassergas-Konversion zu einem Wasserstoff und Kohlendioxid enthaltenen Synthesegas umgesetzt werden kann, einer ersten CO₂-Trenneinrichtung, mit der aus dem Synthesegas Kohlendioxid abtrennbar ist, um Rohwasserstoff zu erhalten, der in wenigstens einer mit der ersten CO₂-Trenneinrichtung verbundenen Aufbereitungseinrichtung zum Wasserstoffprodukt aufbereitet werden kann, sowie einer Verbrennungseinrichtung, in der ein Brennstoff zur Erzeugung von Prozesswärme verbrennbar ist, wobei aus dem Synthesegas abgetrenntes Kohlendioxid durch Sequestrierung entsorgt oder einer stofflichen Nutzung zugeführt werden kann.

Die gestellte Aufgabe wird seitens der Vorrichtung erfindungsgemäß dadurch gelöst, dass sie eine zweite COz-Trenneinrichtung umfasst, die mit der ersten CO₂-Trenneinrichtung über einen Strömungsteiler verbunden ist, über den das Synthesegas in einen ersten Synthesegasteilstrom zur Einleitung in die erste CO₂-Trenneinrichtung und einen zweiten Synthesegasteilstrom zur Einleitung in die zweite CO₂-Trenneinrichtung teilbar ist, wobei aus dem ersten Synthesegasteilstrom in der ersten CO₂-Trenneinrichtung der Rohwasserstoff erhältlich ist und aus dem zweiten Synthesegasteilstrom in der zweiten CO₂-Trenneinrichtung Kohlendioxid abgetrennt werden kann, um ein weitgehend aus Wasserstoff bestehendes Brenngas zur Verwendung in der Verbrennungseinrichtung zu erhalten.

Vorzugsweise kann sowohl das in der ersten als auch das in der zweiten CO₂-Trenneinrichtung abtrennbare Kohlendioxid vollständig durch Sequestrierung entsorgt oder einer stofflichen Nutzung zugeführt werden.

Bei den beiden CO₂-Trenneinrichtungen handelt es sich um Einrichtungen, wie sie aus dem Stand der Technik zur Abtrennung von Kohlendioxid aus Synthesegas bekannt sind. Insbesondere kann zumindest eine der beiden COz-Trenneinrichtungen als Kombination aus Membrantrennung, Druckwechseladsorber und kryogenem Gaszerleger ausgeführt sein. Vorzugsweise handelt es sich jedoch bei zumindest einer der beiden CO₂-Trenneinrichtungen um eine Sauergaswäsche, die beispielsweise mit einer alkalischen wässrigen Aminlösung als Waschmittel betreibbar ist.

Zweckmäßigerweise sind die erste und die zweite CO₂-Trenneinrichtung als Sauergaswäschen ausgeführt. Diese Variante der erfindungsgemäßen Vorrichtung erlaubt es, Investitionskosten und Stellfläche zu reduzieren, indem eine gleichzeitig von der ersten und der zweiten CO₂-Trenneinrichtung nutzbare Waschmittelregenerierung vorgesehen wird, die die beiden Sauergaswäschen verbindet.

Bei der Verbrennungseinrichtung handelt es sich beispielsweise um einen brennerbefeuerten Ofen, mit dem ein der Reformiereinrichtung zuzuführender Einsatz anwärmbar ist. Die Verbrennungseinrichtung kann aber auch ein brennerbefeuerter Dampferzeuger sein, der zur Erzeugung von Prozessdampf eingesetzt werden kann, oder ein Dampf- oder Vorreformers der Reformiereinrichtung, der über einen Brenner beheizbar ist.

Eine Ausgestaltung der erfindungsgemäßen Vorrichtung sieht eine Aufbereitungseinrichtung vor, die einen Druckwechseladsorber umfasst, der es erlaubt, aus dem Rohwasserstoff Reinwasserstoff mit einem Wasserstoffgehalt von mehr als 99,5mol-% zu erhalten. Der Reinwasserstoff kann als Wasserstoffprodukt abgegeben oder zum Wasserstoffprodukt weiterbehandelt werden.

Vorzugsweise ist die Aufbereitungseinrichtung mit einer Ammoniaksynthese verbunden und dazu eingerichtet, den Rohwasserstoff zu einem Ammoniaksynthesegas aufzubereiten, das der Ammoniaksynthese als Einsatzgas zuführbar ist. Die Aufbereitungseinrichtung kann hierbei beispielsweise einen Druckwechseladsorber zur Erzeugung von Reinwasserstoff und eine Stickstoffzuführung umfassen, über die der Reinwasserstoff zum Ammoniaksynthesegas mischbar ist. Möglich ist es aber auch, dass die Aufbereitungseinrichtung einen Mechanisiere oder eine partielle Kondensation oder eine Stickstoffwäsche umfasst.

Eine für die erfindungsgemäße Vorrichtung besonders geeignete Reformiereinrichtung ist mit einem Autothermalreformer oder einen Partialoxidationsreaktor ausgeführt, die lediglich für brennerbefeuerte Hilfsaggregate, wie etwa zur Anwärmung von Einsatzstoffen einsetzbare Öfen, einen Brennstoff benötigen, weshalb nur wenig Synthesegas zur Gewinnung des weitgehend aus Wasserstoff bestehenden Brenngases abgezweigt werden muss, um das Wasserstoffprodukt ohne bzw. mit nur sehr geringer Freisetzung von Kohlendioxid in die Atmosphäre erzeugen zu können. Es soll aber nicht ausgeschlossen sein, dass die Reformiereinrichtung mit einem brennerbefeuerten Dampf- oder Vorreformer ausgeführt ist.

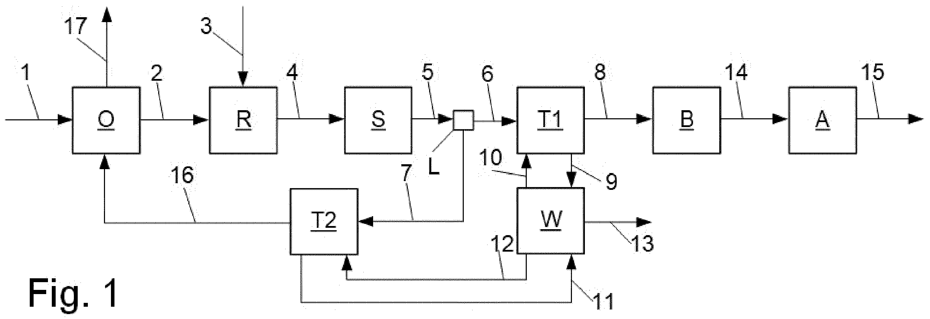

Im Folgenden soll die Erfindung anhand eines in der Figur 1 schematisch dargestellten Ausführungsbeispiels näher erläutert werden.

Das Ausführungsbeispiel der Figur 1 zeigt eine bevorzugte Ausgestaltung des erfindungsgemäßen Verfahrens, bei der als Wasserstoffprodukt ein Ammoniaksynthesegas unter Verwendung eines Autothermalreformers erzeugt wird.

Dem brennerbefeuerten Ofen O wird ein kohlenstoffhaltiger Einsatz, bei dem es sich vorzugsweise um Methan handelt, zugeführt, um angewärmt zu werden. Gemeinsam mit Sauerstoff 3 wird der angewärmte Einsatz 2 im Autothermalreformer R zu einem Wasserstoff, Kohlenmonoxid und Wasser umfassenden Syntheserohgas 4 umgesetzt, aus dem im Wassergas-Konverter S ein weitgehend aus Wasserstoff und Kohlendioxid bestehende Synthesegas 5 erhalten wird. Über den Strömungsteiler L wird das Synthesegas 5 in einen ersten 6 und einen zweiten Synthesegasteilstrom 7 getrennt, von denen der erste 6 in die erste, als Sauergaswäsche ausgeführte CO₂-Trenneinrichtung T1 und der zweite (7) in die ebenfalls als Sauergaswäsche ausgeführte zweite CO₂-Trenneinrichtung T2 weitergeführt wird.

In der ersten CO₂-Trenneinrichtung T1 wird vorzugsweise ein Aminwaschmittel dazu eingesetzt, um Kohlendioxid aus dem ersten Synthesegasteilstrom 6 abzutrennen und eine wasserstoffreiche, Kohlenmonoxid, Methan und Reste von Kohlendioxid umfassende, als Rohwasserstoff bezeichnete Gasfraktion 8 zu erhalten. Zur Abtrennung von Kohlendioxid wird das bei der Wäsche beladene Waschmittel 9 der Waschmittelregenerierung W zugeführt, die die erste CO₂-Trenneinrichtung T1 mit regeneriertem Waschmittel 10 versorgt. Die zweite CO₂-Trenneinrichtung T2 wird mit dem gleichen Waschmittel wie die erste CO₂-Trenneinrichtung T1 betrieben, so dass zur Regenerierung des bei der Wäsche des zweiten Synthesegasteilstroms 7 mit Kohlendioxid beladenen Waschmittels 11 ebenfalls die Waschmittelregenerierung W eingesetzt werden kann, aus der auch die zweite CO₂-Trenneinrichtung T2 mit regeneriertem Waschmittel 12 versorgt wird. In der Waschmittelregenerierung W fällt das abgetrennte Kohlendioxid 13 mit einer Reinheit an, die seine Entsorgung durch Sequestrierung oder stoffliche Nutzung (beides nicht dargestellt) erlaubt.

Der Rohwasserstoff 8 wird in der Aufbereitungseinrichtung B beispielsweise durch eine Kombination von Methanisierung, partieller Kondensation, Stickstoffwäsche und Stickstoffzumischung zu einem Ammoniaksynthesegas 14 aufbereitet, das insbesondere frei von Kohlenmonoxid ist, und in dem Wasserstoff und Stickstoff in dem für die nachfolgende Ammoniaksynthese A stöchiometrischen Verhältnis von 3:1 vorliegen. Das in der Ammoniaksynthese A erhaltene Ammoniak 15 wird z.B. in flüssiger Form gespeichert (nicht dargestellt).

Die in der zweiten CO₂-Trenneinrichtung T2 aus dem zweiten Synthesegasteilstrom 7 erhaltene Gasphase 16 besteht zum weit überwiegenden Teil aus Wassersoff und enthält Kohlenstoff in Form von Kohlenmonoxid, Kohlendioxid und Methan nur in geringen Mengen. Die Gasphase 16 wird im brennerbefeuerten Ofen O als Brenngas eingesetzt, bei dessen Verbrennung ein Rauchgas 17 gebildet wird, das nur sehr wenig Kohlendioxid enthält. Die Größe des zweiten Synthesegasteilstroms 7 wird dabei über den Strömungsteiler L so eingestellt, dass die Menge des Brenngases 16 ausreicht, um die für die Anwärmung des Einsatzes 1 benötigte Wärme vollständig bereitzustellen, so dass auf die Verfeuerung eines kohlenstoffhaltigen Brennstoffs verzichtet werden kann.

## Patentansprüche

1. Verfahren zur Erzeugung eines Wasserstoffprodukts (14), bei dem ein kohlenstoffhaltiger Einsatz (1) durch Reformierung (R) und Wassergas-Konvertierung (S) umgesetzt wird, um ein Wasserstoff und Kohlendioxid enthaltendes, als Synthesegas bezeichnetes Gasgemisch (5) zu erhalten, aus dem in einem ersten CO₂-Trennschritt (T1) durch die Abtrennung von Kohlendioxid Rohwasserstoff (8) entsteht, der durch wenigstens einen weiteren Verfahrensschritt (B) zum Wasserstoffprodukt (14) aufbereitet wird, wobei Prozesswärme durch Verbrennung eines Brennstoffs (16) gewonnen und aus dem Synthesegas (5) abgetrenntes Kohlendioxid (13) durch Sequestrierung entsorgt oder einer stofflichen Nutzung zugeführt wird, **dadurch gekennzeichnet, dass** das Synthesegas (5) in einen ersten (6) und einen zweiten Synthesegasteilstrom (7) getrennt wird, von denen der erste (6) im ersten CO₂-Trennschritt (T1) behandelt wird, um den Rohwasserstoff (8) zu erhalten, während aus dem zweiten Synthesegasteilstrom (7) durch die Abtrennung von Kohlendioxid in einem zweiten CO₂-Trennschritt (T2) ein weitgehend aus Wasserstoff bestehendes Brenngas (16) entsteht, das zur Gewinnung von Prozesswärme verbrannt wird.

2. Verfahren nach Anspruch 1, **dadurch gekennzeichnet, dass** die beiden CO₂-Trennschritte (T1, T2) als Sauergaswäschen ausgeführt werden, wobei in jeder der beiden Sauergaswäsche das gleiche Waschmittel eingesetzt wird.

3. Verfahren nach Anspruch 2, **dadurch gekennzeichnet, dass** das im ersten CO₂-Trennschritt (T1) mit Kohlendioxid beladene Waschmittel (9) gemeinsam mit dem im zweiten CO₂-Trennschritt (T2) mit Kohlendioxid beladenen Waschmittel (11) regeneriert wird (W).

4. Verfahren nach einem der Ansprüche 1 bis 3, **dadurch gekennzeichnet, dass** das weitgehend aus Wasserstoff bestehende Brenngas (16) zur Dampferzeugung oder zur Vorwärmung (O) eines Einsatzes (1) für die Reformierung (R) oder zur Beheizung eines Dampf- oder eines Vorreformers verbrannt wird.

5. Verfahren nach einem der Ansprüche 1 bis 4, **dadurch gekennzeichnet, dass** der Rohwasserstoff (8) durch Methanisierung oder Stickstoffwäsche oder Stickstoffzugabe zu einem Ammoniaksynthesegas (14) aufbereitet wird.

6. Verfahren nach einem der Ansprüche 1 bis 5, **dadurch gekennzeichnet, dass** die Reformierung (R) eine Autothermalreformierung oder eine Partielle Oxidation oder eine Dampfreformierung oder eine Vorreformierung umfasst.

7. Vorrichtung zur Erzeugung eines Wasserstoffprodukts (14), mit einer Reformiereinrichtung (R) und einem mit der Reformiereinrichtung (R) verbundenen Wassergas-Konverter (S), über die ein kohlenstoffhaltiger Einsatz (1) durch Reformierung und Wassergas-Konversion zu einem Wasserstoff und Kohlendioxid enthaltenen Synthesegas (5) umgesetzt werden kann, einer ersten CO₂-Trenneinrichtung (T1), mit der aus dem Synthesegas (5) Kohlendioxid abtrennbar ist, um Rohwasserstoff (8) zu erhalten, der in wenigstens einer mit der ersten CO₂-Trenneinrichtung (T1) verbundenen Aufbereitungseinrichtung (B) zum Wasserstoffprodukt (14) aufbereitet werden kann, sowie einer Verbrennungseinrichtung (O), in der ein Brennstoff (16) zur Erzeugung von Prozesswärme verbrennbar ist, wobei aus dem Synthesegas (5) abgetrenntes Kohlendioxid (13) durch Sequestrierung entsorgt oder einer stofflichen Nutzung zugeführt werden kann, **dadurch gekennzeichnet, dass** sie eine zweite CO₂-Trenneinrichtung (T2) umfasst, die mit der ersten CO₂-Trenneinrichtung (T1) über einen Strömungsteiler (L) verbunden ist, über den das Synthesegas (5) in einen ersten Synthesegasteilstrom (6) zur Einleitung in die erste CO₂-Trenneinrichtung (T1) und einen zweiten Synthesegasteilstrom (7) zur Einleitung in die zweite CO₂-Trenneinrichtung (T2) teilbar ist, wobei aus dem ersten Synthesegasteilstrom (6) in der ersten CO₂-Trenneinrichtung (T1) der Rohwasserstoff (8) erhältlich ist und aus dem zweiten Synthesegasteilstrom (7) in der zweiten CO₂-Trenneinrichtung (T2) Kohlendioxid abgetrennt werden kann, um ein weitgehend aus Wasserstoff bestehendes Brenngas (16) zur Verwendung in der Verbrennungseinrichtung (O) zu erhalten.

8. Vorrichtung nach Anspruch 7, **dadurch gekennzeichnet, dass** die erste (T1) und die zweite CO₂-Trenneinrichtung (T2) als Sauergaswäschen ausgeführt sind, die mit dem gleichen Waschmittel betrieben werden können.

9. Vorrichtung nach Anspruch 8, **dadurch gekennzeichnet, dass** die erste (T1) und die zweite CO₂-Trenneinrichtung (T2) über eine gemeinsam nutzbare Waschmittelregenerierung (W) miteinander verbunden sind.

10. Vorrichtung nach einem der Ansprüche 7 bis 9, **dadurch gekennzeichnet, dass** es sich bei der Verbrennungseinrichtung um einen brennerbefeuerten Ofen (O) oder einen Dampferzeuger oder einen Dampf- oder Vorreformers handelt.

11. Vorrichtung nach einem der Ansprüche 7 bis 10, **dadurch gekennzeichnet, dass** die Aufbereitungseinrichtung (B) mit einer Ammoniaksynthese (A) verbunden und dazu eingerichtet ist, den Rohwasserstoff (8) zu einem Ammoniaksynthesegas (14) aufzubereiten, das der Ammoniaksynthese (A) als Einsatzgas zuführbar ist.

12. Vorrichtung nach Anspruch 11, **dadurch gekennzeichnet, dass** die Aufbereitungseinrichtung (B) eine Methanisierung oder eine partielle Kondensation oder eine Stickstoffwäsche oder eine Stickstoffzuführung umfasst.

13. Vorrichtung nach einem der Ansprüche 7 bis 12, **dadurch gekennzeichnet, dass** die Reformiereinrichtung (R) mit einem Autothermalreformer oder einem Partialoxidationsreaktor oder einem Dampfreformer oder einem Vorreformer ausgeführt ist.
